# EUROPÄISCHE PATENTSCHRIFT

(11) **EP 2 057 401 B1**
(45) Veröffentlichungstag und Bekanntmachung des Hinweises auf die Patenterteilung: **06.10.2010**
(21) Anmeldenummer: 07787627.4
(22) Anmeldetag: 17.07.2007
(51) Int. Cl.: F16L 33/02

(54) **SYSTEM ZUR VORPOSITIONIERUNG EINER SCHLAUCHSCHELLE AUF EINEM SCHLAUCHENDE, INSBESONDERE EINES LADELUFT- UND KÜHLWASSERSCHLAUCHS**
SYSTEM FOR PRE-POSITIONING A HOSE CLIP ON A HOSE END, IN PARTICULAR OF A CHARGE-AIR AND COOLING-WATER HOSE
SYSTEME DE POSITIONNEMENT PREALABLE D'UN COLLIER DE SERRAGE A UNE EXTREMITE D'UN FLEXIBLE, NOTAMMENT D'UN FLEXIBLE D'AIR DE SURALIMENTATION OU D'EAU DE REFROIDISSEMENT

(30) Priorität: 25.08.2006 DE 102006039847; 06.12.2006 DE 102006057497
(43) Veröffentlichungstag der Anmeldung: 13.05.2009
(73) Patentinhaber: Mündener Gummiwerk GmbH, 34346 Hann. Münden (DE)
(72) Erfinder: BRILL, Hartmut, 37242 Bad Soden-Allendorf (DE); DÖNCH, Matthias, 34355 Staufenberg (DE); SPEELMANN, Günther, 34346 Hannoversch-Münden (DE); WILL, Gerhard, 34346 Hannoversch-Münden (DE)
(74) Vertreter: Finger, Karsten
(86) Internationale Anmeldenummer: PCT/EP2007/057361
(87) Internationale Veröffentlichungsnummer: WO 2008/022853

(56) Entgegenhaltungen:
- EP-A- 1 445 526
- EP-A- 1 526 317
- DE-A1- 10 324 236
- DE-U1-202005 011 542
- FR-A- 2 630 808

## Beschreibung

Die Erfindung betrifft ein System zur Vorpositionierung einer Schlauchschelle auf einem Schlauchende, insbesondere eines Ladeluft- und Kühlwasserschlauchs.

Ladeluftschläuche müssen sicher an festen Bauteilen, wie z. B. Rohre aus Kunststoff oder Metall, dem Turbolader, dem Ladeluftkühler oder dem Motoreinlasssystem, angebunden werden. Die bisher verwendeten Verbindungen zwischen den Elastomerschläuchen und den starren Bauteilen gehen überwiegend auf das Prinzip der Klemmung zurück. Dies gilt sowohl für konventionelle Verbindungen, z. B. die Befestigung eines Schlauches mit einer Schlauchschelle, als auch für neuere Steckverbindungen, bei denen ebenfalls ein Endstück auf den Schlauch gepresst wird.

Bei dieser Verbindungsart wird das Schlauchende auf einen festen Stutzen geschoben und anschließend mit einer Schlauchschelle geklemmt. Schlauch und Schlauchschelle werden üblicherweise in einem Zulieferbetrieb vormontiert hergestellt und zur Endmontage geliefert. Dabei soll die Schlauchschelle verliersicher an dem Schlauch befestigt sein. Die Schlauchschelle soll vormontiert axial und radial sicher befestigt sein. Die Schlauchschelle darf aber nicht behindert oder blockiert werden.

Aus der EP 0 593 852 B1 ist eine Schlauchschelle mit einem ringförmig ausgebildeten und aus elastischem Material bestehenden Halteteil bekannt, wobei das Halteteil aus zwei nebeneinander angeordneten, koaxialen und offenen Ringen besteht, deren Enden paarweise in Axialrichtung durch Stege miteinander verbunden sind. Die Schlauchschelle ist hierbei zwischen den offenen Ringen eingesetzt.

Aus der DE 101 28 457 A1 ist eine Schlauchanordnung bekannt, die einen Schlauch aus polymerem Werkstoff umfasst, der insbesondere mit einem eingebetteten Festigkeitsträger versehen ist, wobei wenigstens ein Schlauchende auf einen Stutzen aus Metall oder Kunststoff aufgeschoben ist und eine Schraubschelle das Schlauchende auf den Stutzen presst.

Aus der FR 2630808 ist ebenfalls ein System zur Vorpositionierung einer Schlauchstelle auf einem Schlauchende bekannt. Das System besteht aus einem Ring, auf dem fingerartige Vorsprünge angeordnet sind, die sich in axialer Richtung des Schlauches, auf dem das System aufgeschoben wird, erstrecken. Jeder Vorsprung weist eine Aussparung auf, die in ihrer Breite der Breite einer Schlauchschelle entspricht. Die Hülse wird zunächst auf die Schlauchschelle und danach wird die Hülse gemeinsam mit der Schlauchschelle auf ein Schlauchende aufgeschoben. Nach dem Aufschieben der Hülse auf das Schlauchende wird die Schlauchschelle mit Hilfe des Schellenschlosses auf dem Schlauchende befestigt. Mit dem aus der genannten Druckschrift bekannten System zur Vorpositionierung einer Schlauchschelle auf einem Schlauchende kann ein radiales Verdrehen und eine axiale Verschiebung der Schlauchschelle nicht sicher verhindert werden, da die Hülse nicht fest mit dem Schlauchende verbunden ist.

Aus der DE 103 24 236 A1 ist ebenfalls ein System zur Vorpositionierung einer Schlauchschelle auf einem Schlauchende bekannt. Bei dem aus dieser Druckschrift bekannten System ist an der Schlauchschelle ein Verklammerungsteil befestigt, das auf das Schlauchende aufgeschobene Schlauchschelle in axialer Richtung des Schlauches verläuft. Das Verklammerungsteil wird mit dem Schlauchende fest verbunden. Durch die feste Verbindung des Verklammerungsteils zur Schlauchschelle einerseits und zum Schlauchende andererseits ist durch das aus der genannten Druckschrift bekannte System ein radiales Verdrehen der Schlauchschelle wirksam verhindert. Eine axiale Verschiebung der Schlauchschelle auf dem Schlauchende kann durch das Vorsehen mehrerer Verklammerungsteile unterbunden werden. Da sowohl die Schlauchschelle als auch die Verklammerungsteile jedoch bei der Montage berührend auf das Schlauchende aufgeschoben werden, kann nicht ausgeschlossen werden, dass es zu einer Beschädigung des Schlauchendes während der Montage kommt.

Die bekannten Lösungen zur Befestigung der Schlauchschellen haben also wesentliche Nachteile, die in möglichen Montagefehlern liegen. Weiter ist nicht ausgeschlossen, dass die jeweiligen Befestigungsmittel bei der Montage der Schlauchschelle den Schlauchstutzen verletzen.

Der Erfindung liegt die Aufgabe zugrunde, eine montagefreundliche Vorbefestigung einer Schlauchschelle an einem Schlauchende zu realisieren, insbesondere ein konstruktiv einfaches System zur Vorpositionierung einer Schlauchschelle zu schaffen, welches die Schlauchschelle verdrehfest und gegen axiale Verschiebung auf einem Schlauchende festhält.

Diese Aufgabe wird mit einem System gemäß den Merkmalen des Patentanspruchs 1 gelöst. Weiterbildungen und vorteilhafte Ausgestaltungen der Erfindung ergeben sich aus den Unteransprüchen.

Durch ein derartiges einfaches System wird erreicht, dass die Schlauchschelle definiert, montagefreundlich und verliersicher auf dem Schlauchende positioniert ist. Die vorzugsweise gleichmäßig voneinander beabstandeten Fixierteile verhindern ein Verdrehen der Schlauchschelle in axialer und radialer Richtung.

Das unlösbar mit dem Ringabschnitt der Schlauchschelle verbundene, am Schlauchende befestigte Fixierteil bildet hierbei einen Schellenfixpunkt und verhindert ein radiales Verdrehen der Schlauchschelle.

Durch das weitere bzw. durch die weiteren, vorzugsweise zwei weiteren Fixierteile wird eine axiale Verschiebung der Schlauchschelle verhindert. In diesen Fixierteilen ist die Schlauchschelle vorzugsweise mit einem lichten Abstand von der Schlauchoberfläche lösbar fixiert oder lose eingelegt. Beim Anziehen der Schlauchschelle verkleinert sich der Schlauchschellenbanddurchmesser, wobei die Schlauchschelle aus den genannten Fixierteilen herausgezogen wird.

Gemäß einer vorteilhaften Ausgestaltung der Erfindung ist vorgesehen, dass das unlösbar mit dem Ringabschnitt der Schlauchschelle vorzugsweise durch Punktschweißen verbundene Fixierteil derart mit dem Ringabschnitt verbunden ist, dass nach der Montage des Fixierteils am Schlauchende die Schlauchschelle im Bereich dieses Ringabschnitts der Schlauchoberfläche aufliegt.

Das unlösbar mit dem Ringabschnitt der Schlauchschelle verbundene Fixierteil weist vorzugsweise wie das bzw. die weiteren Fixierteile ein U-förmiges Element auf, das am Schlauchende befestigt mit seiner offenen Seite zur Schlauchoberfläche weist, wobei der die beiden U-Schenkel verbindende Steg axial und parallel zur Schlauchoberfläche verläuft und wobei der dem Schlauchende am nächsten liegende U-Schenkel ein Verbindungselement aufweist, mit dem das U-förmige Element an der Stirnseite des Schlauchendes befestigt ist.

Eine Weiterbildung der Erfindung sieht vor, dass die Fixierteile und die Schlauchschelle vor der Montage auf dem Schlauchende zu einer Einheit verbindbar sind, um einfacher und besser am Schlauchende befestigt zu werden. Die Fixierteile können anschließend durch ihre Verbindungsstücke an der Stirnseite des Schlauchendes befestigt werden, so dass die Schlauchschelle dann im geöffneten Zustand verdrehsicher gegen radiale und axiale Verschiebung auf dem Schlauchende vorpositioniert ist.

Nach dem Aufstecken des Schlauchendes auf einen Rohrstutzen kann die Schlauchschelle dann sicher angezogen werden, wobei sie sich aus dem bzw. den weiteren Fixierteilen löst und das Schlauchende auf den Rohrstutzen presst. Eine negative Beeinflussung durch die Fixierteile ist nicht zu befürchten. Diese verbleiben ohne Funktion auf dem Schlauchende.

Da das erfindungsgemäße Fixierteil teilereduziert und mit kleinen Abmessungen herstellbar ist, ist der benötigte Platzbedarf äußerst gering. Die Montage des Systems am Schlauchende ist einfach.

Ein Fixierteil, das die vorpositionierte Schlauchschelle nur gegen axiale Verschiebung auf dem Schlauchende sichern soll, wird dadurch gebildet, dass die auf das Schlauchende aufgezogene Schlauchschelle mit einem Ringabschnitt lose im Zwischenraum des U-förmigen Elements eingelegt ist, wobei das Fixierteil nach dem Anziehen der Schlauchschelle ebenfalls funktionslos am Schlauchende verbleibt. Die beiden U-Schenkel sichern hierbei die Schlauchschelle vor und während des Anziehens gegen axiales Verschieben.

Die lösbare Fixierung ist erfindungsgemäß durch eine lösbare Schnapp- oder Rastverbindung zwischen dem Ringabschnitt und den U-Schenkeln gebildet. Es handelt hierbei um eine besonders einfach ausgebildete Verbindung, die ihren Zweck, die Schlauchschelle lösbar zu fixieren, besonders gut erfüllt.

Weiterhin ist vorgesehen, dass die U-Schenkel zur lösbaren Fixierung des Ringabschnitts auf ihrer Innenseite jeweils einen oder mehrere Haken, Noppen, Wülste oder andere Vorsprünge aufweisen, die zum Steg hin Hinterschnitte bilden, in welche die Seitenkanten des Ringabschnitts lösbar einrastbar sind. Dadurch lässt sich die Schlauchschelle besonders einfach mit dem oder den Fixierteilen verbinden.

Eine vorteilhafte Ausgestaltung der Erfindung sieht vor, dass die U-Schenkel auf ihrer Außenseite eine parallel zu Schlauchoberfläche verlaufende Sicke aufweisen, derart, dass auf ihrer Innenseite jeweils ein entsprechender Vorsprung zur Bildung eines Hinterschnittes entsteht, in den die Seitenkanten des Ringabschnitts lösbar einrastbar sind.

Eine alternative vorteilhafte Ausgestaltung der Erfindung sieht vor, dass die U-Schenkel auf ihrer Außenseite wenigstens einen Körnerschlag aufweisen, derart, dass auf ihrer Innenseite jeweils ein entsprechender Vorsprung zur Bildung eines Hinterschnittes entsteht, in den die Seitenkanten des Ringabschnitts lösbar einrastbar sind.

Eine Weiterbildung der Erfindung sieht vor, dass die U-Schenkel zur lösbaren Fixierung des Ringabschnitts auf ihrer Innenseite jeweils einen oder mehrere Hinterschnitte, insbesondere in Form von Nuten, Einkerbungen oder einer anderen Vertiefungen, aufweisen, in welche die Seitenkanten des Ringabschnitts lösbar einrastbar sind. Die U-Schenkel bilden hierbei quasi die Schnapparme.

Die lösbare Fixierung ist erfindungsgemäß auch durch eine lösbare Schnapp- oder Rastverbindung zwischen dem Ringabschnitt und dem Steg herstellbar.

Vorzugsweise ist der Steg hierzu als ein U-förmiges Kunststoffteil ausgebildet, das mit seiner offenen Seite zur Schlauchoberfläche weist, wobei der die beiden U-Schenkel verbindende Steg des Kunststoffteils axial und parallel zur Schlauchoberfläche verläuft, wobei dessen U-Schenkel wiederum an ihren Enden jeweils einen nach innen weisenden Vorsprung aufweisen, die zum Steg des Kunststoffteils hin Hinterschnitte bilden, in welche die Seitenkanten des Ringabschnitts lösbar einrastbar sind

Eine Weiterbildung der Erfindung sieht vor, dass Teile des U-förmigen Elements oder des Ringabschnitts zur lösbaren Fixierung der Schlauchschelle plastisch verformbar sind.

Vorzugsweise weisen zu diesem Zweck die U-Schenkel jeweils eine Lasche auf, die der anderen gegenüberliegt und mit ihrem freien Ende aus der Schenkelwand in den Zwischenraum gedrückt und zur Schlauchoberfläche ausgerichtet ist, derart, dass der Ringabschnitt der Schlauchschelle zwischen Steg und Lasche fixiert angeordnet ist, wobei die Laschen beim Anziehen der Schlauchschelle in die Schenkelwand zurückgedrückt werden.

Es handelt sich hierbei um keine Rast- oder Schnappverbindung, sondern um eine lösbare Fixierung durch Verformung. Zunächst wird die Schlauchschelle bzw. ihr Ringabschnitt in den Zwischenraum des U-förmigen Elements gebracht. Durch Eindrücken der Laschen wird die Schlauchschelle dann zwischen Steg und Lasche fixiert. Beim Anziehen der Schlauchschelle wird durch die hierbei auf die Laschen einwirkende Kraft das Eindrücken wieder rückgängig gemacht.

Weiterhin ist vorgesehen, dass sowohl der Steg des U-förmigen Elements als auch der Ringabschnitt der Schlauchschelle eine Durchbohrung aufweisen und mittels einer Kunststoffniet miteinander verbindbar sind, derart, dass die Kunststoffniet beim Anziehen der Schlauchschelle aus der Durchbohrung gezogen wird, wobei sich die Schlauchschelle löst.

Weiterhin ist vorgesehen, dass der Steg des U-förmigen Elements eine Durchbohrung und der Ringabschnitt der Schlauchschelle eine Ausstülpung aufweisen, wobei die Ausstülpung durch die Durchbohrung geführt und zur lösbaren Fixierung der Schlauchschelle an dem U-förmigen Element nach außen gebogen ist. Vorzugsweise handelt es sich bei dieser Verbindung um eine Ringschnappverbindung.

Alternativ hierzu ist der Ringabschnitt der Schlauchschelle kraftschlüssig zwischen den U-Schenkeln lösbar einklemm- oder einkeilbar, wobei die U-Schenkel auf ihrer Innenseite keilförmig zum Steg hin zusammenlaufen.

Vorzugsweise ist das Verbindungselement mit dem Schlauchende verpresst oder in das Schlauchende eingestochen und verpresst oder in ausgeformte Öffnungen eingesteckt und verpresst. Da beim Verpressen die Gefahr besteht, dass der Schlauchstutzen verletzt wird, ist die Variante des Einstechens vorzuziehen.

Zweckmäßigerweise ist das Verbindungselement ein U-förmiges Teil ist, dessen offene Seite zur Stirnseite des Schlauchendes weist, wobei ein U-Schenkel des Verbindungselements mit dem U-Schenkel des U-förmigen Elements vorzugsweise stoffschlüssig verbunden ist.

Das Fixierteil besteht vorzugsweise aus Metall und/oder aus Kunststoff.

Nachfolgend wird die Erfindung anhand von Ausführungsbeispielen erläutert, die in der Zeichnung dargestellt sind. In dieser zeigen:
- Fig. 1: schematisch ein mit Sicken versehenes Fixierteil mit eingerasteter Schlauchschelle in a) Seitenansicht und b) Draufsicht mit Blickrich- tung auf die Stirnseite des Schlauchendes,
- Fig. 2: schematisch ein mit Körnerschlag versehenes Fixierteil mit eingeras- teter Schlauchschelle in a) Seitenansicht und c) Draufsicht mit Blick- richtung auf die Oberfläche des Schlauchendes sowie ohne eingeras- tete Schlauchschelle in b) Draufsicht auf den in a) gezeigten Schnitt x-x,
- Fig. 3: schematisch ein mit Einkerbungen versehenes Fixierteil mit einge- rasteter Schlauchschelle in a) Seitenansicht und c) Draufsicht mit Blickrichtung auf die Oberfläche des Schlauchendes sowie ohne ein-
- Fig. 4: gerastete Schlauchschelle in b) Draufsicht auf den in a) gezeigten Schnitt x-x schematisch ein mit Kunststoffformteil versehenes Fixierteil mit ein- gerasteter Schlauchschelle in a) Seitenansicht und b) Draufsicht mit Blickrichtung auf die Stirnseite des Schlauchendes und c) Draufsicht mit Blickrichtung auf die Oberfläche des Schlauchendes,
- Fig. 5: schematisch ein mit plastisch verformbaren Laschen versehenes Fi- xierteil mit fixierter Schlauchschelle in a) Seitenansicht und b) Draufsicht mit Blickrichtung auf die Stirnseite des Schlauchendes,
- Fig. 6: schematisch ein mit einer Durchbohrung versehenes Fixierteil mit einer durch eine Kunststoffniet am Fixierteil befestigten Schlauch- schelle in a) Seitenansicht und b) Draufsicht mit Blickrichtung auf die Stirnseite des Schlauchendes,
- Fig. 7: schematisch ein mit einer Durchbohrung versehenes Fixierteil mit einer durch eine Ausstülpung befestigten Schlauchschelle in a) Sei- tenansicht und b) Draufsicht mit Blickrichtung auf die Stirnseite des Schlauchendes,
- Fig. 8: schematisch in Seitenansicht ein Fixierteil mit einem Verbindungs- stück, das in das im Längsschnitt dargestellte Schlauchende einge- stochen ist,
- Fig. 9: schematisch in Seitenansicht ein Fixierteil mit einem Verbindungs- stück, das mit dem im Längsschnitt dargestellten Schlauchende ver- presst ist und
- Fig. 10: in perspektivischer Ansicht ein an einem Schlauchende befestigtes System zur Vorpositionierung einer Schlauchschelle am Schlau- chende.

In allen Figuren bezeichnen gleiche Bezugszeichen gleiche Bauteile.

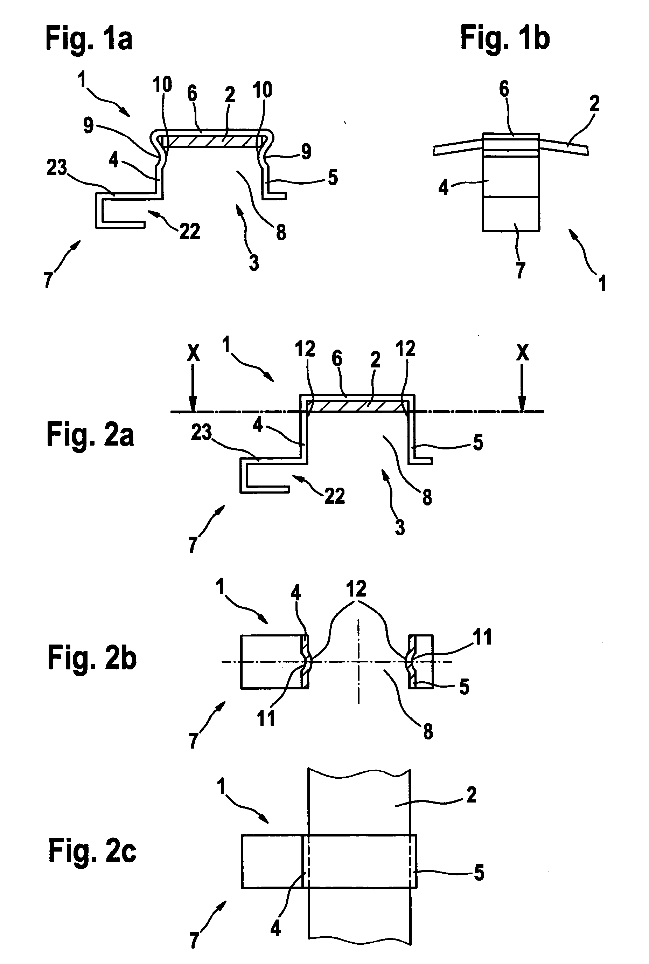

Fig. 1 zeigt schematisch ein mit Sicken 9 versehenes Fixierteil 1 mit eingerasteter Schlauchschelle 2 in a) Seitenansicht und b) Draufsicht mit Blickrichtung auf die Stirnseite des hier nicht dargestellten Schlauchendes.

Das Fixierteil 1 dienst der Vorpositionierung einer Schlauchschelle auf einem Schlauchende, bevor dieses auf einen Rohrstutzen aufgesteckt wird. Hierbei ist es erforderlich, dass die Schlauchschelle zunächst beabstandet vom Schlauch angeordnet, d.h. anziehbar ist, damit das Schlauchende auf den Rohrstutzen aufgesteckt werden kann. Erst anschließend wird das Schlauchende durch Anziehen der Schlauchschelle auf dem Rohrstutzen befestigt.

Das Fixierteil 1 besteht nun erfindungsgemäß aus einem U-förmigen Element, das am Schlauchende befestigt mit seiner offenen Seite 3 zur Schlauchoberfläche weist, wobei der die beiden U-Schenkel 4, 5 verbindende Steg 6 axial und parallel zur Schlauchoberfläche verläuft.

Der dem Schlauchende am nächsten liegende U-Schenkel 4 weist ein Verbindungselement 7 auf, mit dem das U-förmigen Element an der Stirnseite des Schlauchendes befestigt ist. Das Verbindungselement 7 ist erfindungsgemäß ein U-förmiges Teil, dessen offene Seite 22 zur Stirnseite des Schlauchendes weist, wobei ein U-Schenkel 23 des Verbindungselement 7 mit dem U-Schenkel 4 des U-förmigen Elements vorzugsweise stoffschlüssig verbunden ist.

Das Verbindungselement 7 ist entweder mit dem Schlauchende verpresst, wobei sich die stirnseitige Schlauchwand zwischen den U-Schenkeln des Verbindungselements 7 befindet, oder das Verbindungselement 7 ist in das Schlauchende eingestochen, wobei sich dann der nicht mit dem U-Schenkel 4 des U-förmigen Elements verbundene U-Schenkel des Verbindungselements 7 in der stirnseitigen Schlauchwand befindet.

Das U-förmige Element ist nun derart ausgebildet, dass die auf das Schlauchende aufgezogene Schlauchschelle 2 mit einem Ringabschnitt lösbar im Zwischenraum 8 des U-förmigen Elements fixiert ist, derart, dass sich die Schlauchschelle 2 beim Anziehen aus der Fixierung löst, wobei das Fixierteil 1 nach dem Anziehen der Schlauchschelle 2 funktionslos am Schlauchende verbleibt.

Bei der in Fig. 1 dargestellten lösbare Fixierung handelt es sich um eine lösbare Schnapp- oder Rastverbindung zwischen dem Ringabschnitt der Schlauchschelle 2 und den U-Schenkeln 4, 5.

Erfindungsgemäß weisen die U-Schenkel 4, 5 auf ihrer Außenseite eine parallel zur hier nicht dargestellten Schlauchoberfläche verlaufende Sicke 9 auf, derart, dass auf ihrer Innenseite jeweils ein entsprechender Vorsprung 10 zur Bildung eines Hinterschnittes ausgebildet ist, in den die Seitenkanten des Ringabschnitts lösbar eingerastet sind. Die Sicken 9 sind hierbei derart ausgebildet, dass sich die Schlauchschelle beim Anziehen aus der Fixierung, also aus dem Hinterschnitt, löst.

Fig. 2 zeigt schematisch ein mit Körnerschlag 11 versehenes Fixierteil 1 mit eingerasteter Schlauchschelle 2 in a) Seitenansicht und c) Draufsicht mit Blickrichtung auf die hier nicht dargestellte Oberfläche des Schlauchendes sowie ohne eingerastete Schlauchschelle 2 in b) Draufsicht auf den in a) gezeigten Schnitt x-x.

Hinsichtlich des allgemeinen Aufbaus des Fixierteils 1 wird zwecks Vermeidung von Wiederholungen auf die Ausführungen zu Fig. 1 verwiesen, wobei gleiche Bezugsziffern gleiche Bauteile bezeichnen.

Das in Fig. 2 dargestellte Fixierteil 1 unterscheidet sich von dem in Fig. 1 dargestellten Fixierteil 1 dadurch, dass die U-Schenkel auf ihrer Außenseite keine Sicke, sondern wenigstens einen Körnerschlag 11 aufweisen, derart, dass auf ihrer Innenseite jeweils ein entsprechender Vorsprung 12 zur Bildung eines Hinterschnittes entsteht, in den die Seitenkanten des Ringabschnitts lösbar eingerastet bzw. hinsichtlich der Ansicht b) lösbar einrastbar sind.

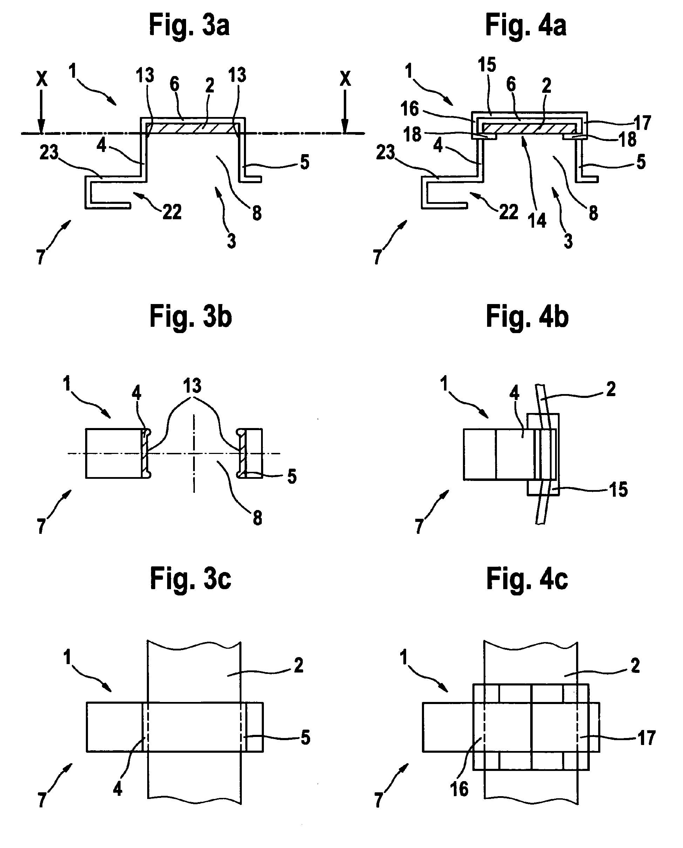

Fig. 3 zeigt schematisch ein mit Einkerbungen 13 versehenes Fixierteil 1 mit eingerasteter Schlauchschelle 2 in a) Seitenansicht und c) Draufsicht mit Blickrichtung auf die hier nicht dargestellte Oberfläche des Schlauchendes sowie ohne Schlauchschelle 2 in b) Draufsicht auf den in a) gezeigten Schnitt x-x.

Hinsichtlich des allgemeinen Aufbaus des Fixierteils 1 wird zwecks Vermeidung von Wiederholungen auf die Ausführungen zu Fig. 1 verwiesen, wobei gleiche Bezugsziffern gleiche Bauteile bezeichnen.

Die U-Schenkel 4, 5 dieses Fixierteils 1 weisen zur lösbaren Fixierung des Ringabschnitts der Schlauchschelle 2 auf ihrer Innenseite jeweils einen Hinterschnitt in Form einer Einkerbung 13 auf, in welche die Seitenkanten des Ringabschnitts lösbar eingerastet bzw. hinsichtlich der Ansicht b) lösbar einrastbar sind.

Anstelle einer lösbare Schnapp- oder Rastverbindung zwischen dem Ringabschnitt und den U-Schenkeln 4, 5 kann auch eine lösbare Schnapp- oder Rastverbindung zwischen dem Ringabschnitt und dem Steg 6 vorgesehen sein.

Ein derartiges Fixierteil 1 ist in Fig. 4 dargestellt. Fig. 4 zeigt schematisch ein mit einem Kunststoffformteil versehenes Fixierteil 1 mit eingerasteter Schlauchschelle 2 in a) Seitenansicht und b) Draufsicht mit Blickrichtung auf die hier nicht dargestellte Stirnseite des Schlauchendes und in c) Draufsicht mit Blickrichtung auf die hier nicht dargestellte Oberfläche des Schlauchendes.

Hinsichtlich des allgemeinen Aufbaus des Fixierteils 1 wird zwecks Vermeidung von Wiederholungen auf die Ausführungen zu Fig. 1 verwiesen, wobei gleiche Bezugsziffern gleiche Bauteile bezeichnen.

Erfindungsgemäß ist bei dem in Fig. 4 dargestellten Fixierteil 1 der Steg 6 ein im Querschnitt U-förmiges Kunststoffteil, das mit seiner offenen Seite 14 zur Schlauchoberfläche weist, wobei der die beiden U-Schenkel verbindende Steg 15 des Kunststoffteils axial und parallel zur Schlauchoberfläche verläuft und wobei dessen U-Schenkel 16, 17 an ihren Enden jeweils einen nach innen weisenden Vorsprung 18 aufweisen, die zum Steg 15 des Kunststoffteils hin Hinterschnitte bilden, in welche die Seitenkanten des Ringabschnitts lösbar eingerastet sind.

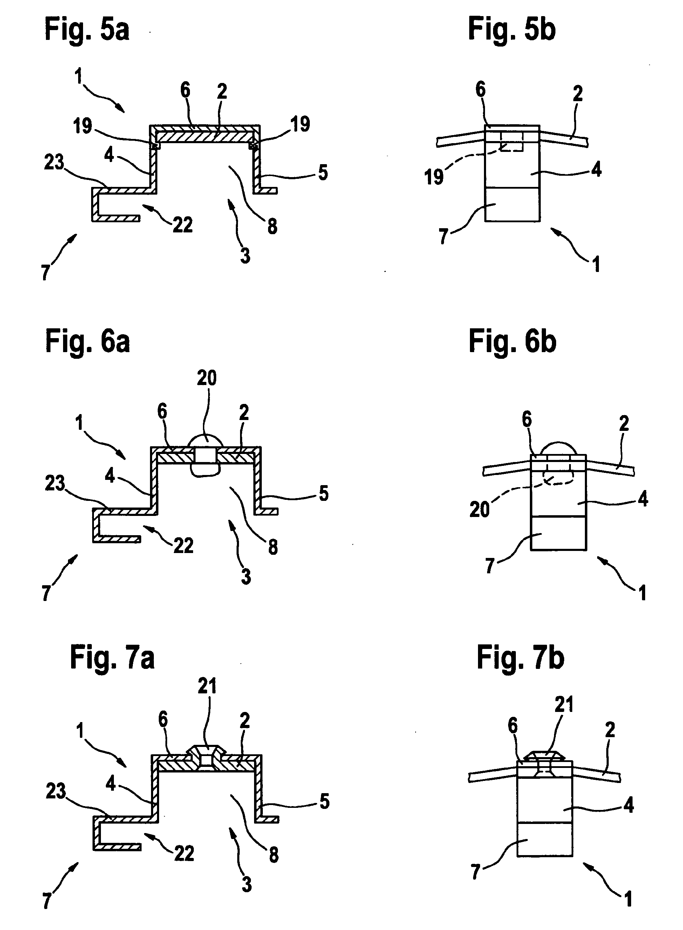

Weiterhin ist es möglich, dass Teile des U-förmigen Elements oder des Ringabschnitts zur lösbaren Fixierung der Schlauchschelle 2 plastisch verformbar sind. In Fig. 5 ist ein derartiges Fixierteil 1 dargestellt. Fig. 5 zeigt schematisch ein mit plastisch verformbaren Laschen versehenes Fixierteil mit fixierter Schlauchschelle in a) Seitenansicht und b) Draufsicht mit Blickrichtung auf die hier nicht dargestellte Stirnseite des Schlauchendes.

Zur lösbaren Fixierung der Schlauchschelle 2 weisen die U-Schenkel 4, 5 jeweils eine Lasche 19 auf, die der anderen gegenüberliegt und die mit ihrem freien Ende aus der Schenkelwand in den Zwischenraum 8 gedrückt und zur hier nicht dargestellten Schlauchoberfläche ausgerichtet ist, derart, dass der Ringabschnitt zwischen Steg 6 und Lasche 19 fixiert ist. Beim Anziehen der Schlauchschelle werden die Laschen 19 erfindungsgemäß in die Schenkelwand zurückgedrückt, wobei sich die Schlauchschelle 2 aus der Fixierung löst.

Eine weitere Möglichkeit der lösbaren Fixierung ist in Fig. 6 dargestellt. Fig. 6 zeigt schematisch ein mit einer Durchbohrung versehenes Fixierteil 1 mit einer durch eine Kunststoffniet 20 am Fixierteil 1 befestigten Schlauchschelle 2 in a) Seitenansicht und b) Draufsicht mit Blickrichtung auf die hier nicht dargestellt Stirnseite des Schlauchendes.

Hinsichtlich des allgemeinen Aufbaus des Fixierteils 1 wird zwecks Vermeidung von Wiederholungen auf die Ausführungen zu Fig. 1 verwiesen, wobei gleiche Bezugsziffern gleiche Bauteile bezeichnen.

Erfindungsgemäß weisen vorliegend sowohl der Steg 6 des U-förmigen Elements als auch der Ringabschnitt der Schlauchschelle 2 eine Durchbohrung auf und sind mittels einer Kunststoffniet 20 derart miteinander verbunden, dass die Kunststoffniet 20 beim Anziehen der Schlauchschelle 2 aus der Durchbohrung der Schlauchschelle 2 gezogen wird, wobei sich die Schlauchschelle 2 löst.

Noch eine Möglichkeit der lösbaren Fixierung ist in Fig. 7 dargestellt. Fig. 7 zeigt schematisch ein mit einer Durchbohrung versehenes Fixierteil 1 mit einer durch eine Ausstülpung 21 befestigten Schlauchschelle 2 in a) Seitenansicht und b) Draufsicht mit Blickrichtung auf die hier nicht dargestellte Stirnseite des Schlauchendes.

Hinsichtlich des allgemeinen Aufbaus des Fixierteils 1 wird zwecks Vermeidung von Wiederholungen auf die Ausführungen zu Fig. 1 verwiesen, wobei gleiche Bezugsziffern gleiche Bauteile bezeichnen.

Der Steg 6 des U-förmigen Elements weist erfindungsgemäß eine Durchbohrung auf, der Ringabschnitt der Schlauchschelle 2 dagegen eine Ausstülpung 21, wobei die Ausstülpung 21 durch die Bohrung geführt und zur lösbaren Fixierung der Schlauchschelle 2 an dem U-förmigen Element nach außen gebogen ist. Beim Anziehen der Schlauchschelle 2 wird die Ausstülpung 21 unter Verformung aus der Durchbohrung gezogen, wobei sich die Schlauchschelle 2 vom Fixierteil 1 löst.

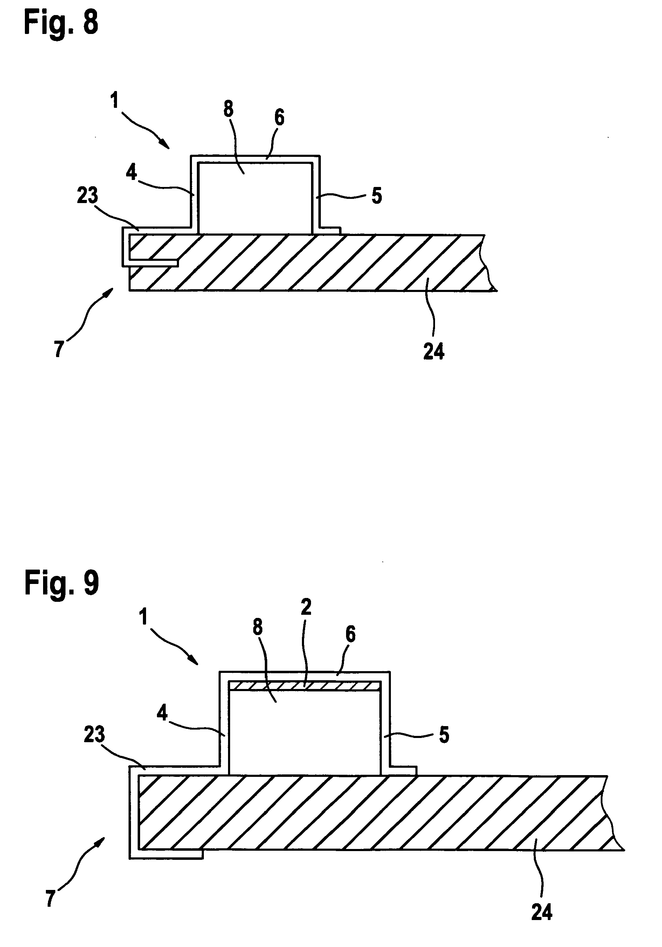

Fig. 8 zeigt schematisch in Seitenansicht ein erfindungsgemäßes Fixierteil 1 mit einem Verbindungsstück 7, das in ein im Längsschnitt dargestelltes Schlauchende 24 eingestochen ist. Hierbei befindet sich der nicht mit dem U-Schenkel 4 des U-förmigen Elements verbundene U-Schenkel des Verbindungselements 7 in der stirnseitigen Schlauchwand.

Hinsichtlich des allgemeinen Aufbaus des Fixierteils 1 wird zwecks Vermeidung von Wiederholungen auf die Ausführungen zu Fig. 1 verwiesen, wobei gleiche Bezugsziffern gleiche Bauteile bezeichnen.

Fig. 9 zeigt schematisch in Seitenansicht ein erfindungsgemäßes Fixierteil 1 mit einem Verbindungsstück 7, das mit dem im Längsschnitt dargestellten Schlauchende 24 verpresst ist. Hierbei befindet sich die stirnseitige Schlauchwand zwischen den U-Schenkeln des Verbindungselements 7.

Hinsichtlich des allgemeinen Aufbaus des Fixierteils 1 wird zwecks Vermeidung von Wiederholungen auf die Ausführungen zu Fig. 1 verwiesen, wobei gleiche Bezugsziffern gleiche Bauteile bezeichnen.

Im Zwischenraum 8 des U-förmigen Elements des Fixierteils 1 ist ein im Querschnitt dargestellter Ringabschnitt der Schlauchschelle 2 angeordnet, der im Gegensatz zu den jeweils in den Fig. 1 bis 7 dargestellten lösbaren Fixierungen nur lose im Zwischenraum 8 des U-förmigen Elements und beabstandet von der Schlauchoberfläche eingelegt ist, wobei die Schlauchschelle 2 gegen axiales Verschieben auf dem Schlauchende 24 fixiert ist.

Nach dem Anziehen die Schlauchschelle 2 verbleibt auch hier das Fixierteil 1 funktionslos am Schlauchende 24.

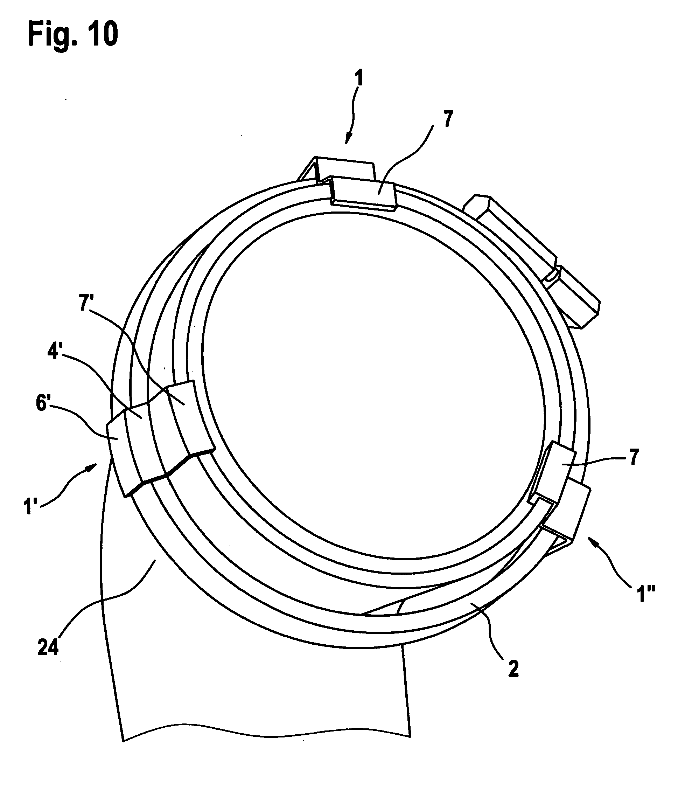

In Fig. 10 ist in perspektivischer Ansicht ein an einem Schlauchende 24 befestigtes erfindungsgemäßes System zur Vorpositionierung einer Schlauchschelle 2 auf dem Schlauchende 24 dargestellt.

Das System umfasst hierbei drei Fixierteile 1, 1' und 1", deren jeweiliges U-förmiges Verbindungsstück 7, 7' in das Schlauchende 24 eingestochen ist. Hierbei befindet sich der nicht mit dem U-Schenkel 4, 4' des U-förmigen Elements verbundene U-Schenkel des Verbindungselements 7 in der stirnseitigen Schlauchwand.

Das Fixierteil 1' des Systems ist mit einem Ringabschnitt der Schlauchschelle 2 durch Punktschweißen unlösbar verbunden. In diesem Bereich liegt die Schlauchschelle 2 auf der Schlauchoberfläche auf. Durch dieses Fixierteil 1' lässt sich die Schlauchschelle 2 verdrehfest auf dem Schlauchende 24 vorpositionieren und später endmontieren.

In den anderen beiden Fixierteilen 1 und 1" ist die Schlauchschelle 2 jeweils mit einem Ringabschnitt lösbar fixiert, vorzugsweise eingerastet oder -geklipst, und zwar mit größerem radialem Abstand zu der Schlauchoberfläche. Durch diese Fixierteile 1 und 1" lässt sich die Schlauchschelle 2 insbesondere gegen axiale Verschiebung auf dem Schlauchende 24 vorpositionieren.

Durch das System wird erreicht, dass die Schlauchschelle 2 axial und radial gegen Verschieben gesichert ist und mithin gute Montageeigenschaften aufweist.

Nach dem Aufstecken des Schlauchendes 24 auf einen hier nicht dargestellten Rohrstutzen kann die Schlauchschelle 2 sicher angezogen und mithin endmontiert werden, wobei sie sich aus den Fixierteilen 1 und 1" löst und das Schlauchende 24 sicher auf den Rohrstutzen presst. Die Fixierteile 1 und 1" verbleiben ohne Funktion auf dem Schlauchende 24.

### Bezugszeichenliste

### (ist Bestandteil der Beschreibung)

- 1: Fixierteil
- 2: Schlauchschelle
- 3: offene Seite
- 4: U-Schenkel
- 5: U-Schenkel
- 6: Steg
- 7: Verbindungselement
- 8: Zwischenraum
- 9: Sicke
- 10: Vorsprung
- 11: Körnerschlag
- 12: Vorsprung
- 13: Einkerbung
- 14: offene Seite
- 15: Steg
- 16: U-Schenkel
- 17: U-Schenkel
- 18: Vorsprung
- 19: Lasche
- 20: Kunststoffniet
- 21: Ausstülpung
- 22: offene Seite
- 23: U-Schenkel
- 24: Schlauchende

## Patentansprüche

1. System zur Vorpositionierung einer Schlauchschelle (2) auf einem Schlauchende (24) aus
a) einem mit einem Ringabschnitt der Schlauchschelle (2) verbundenen, am Schlauchende (24) befestigten ersten Fixierteil (1') und
b) aus einem oder mehreren, vorzugsweise zwei weiteren Fixierteilen (1,1"), die jeweils ein U-förmiges Element aufweisen, das am Schlauchende (24) befestigt mit seiner offenen Seite (3) zur Schlauchoberfläche weist, wobei der die beiden U-Schenkel (4, 5) verbindende Steg (6) axial und parallel zur Schlauchoberfläche verläuft und wobei der dem Schlauchende (24) am nächsten liegende U-Schenkel (4) ein Verbindungselement (7) aufweist, mit dem das U-förmige Element an der Stirnseite des Schlauchendes (24) befestigt ist, wobei das U-förmige Element derart ausgebildet ist, dass die auf das Schlauchende (24) aufgezogene Schlauchschelle (2) mit einem Ringabschnitt im Zwischenraum (8) des U-förmigen Elements fixiert ist, **dadurch gekennzeichnet, dass** die Schlauchschelle durch eine lösbare Schnapp- oder Rastverbindung zwischen dem Ringabschnitt und den U-Schenkeln (4, 5) oder dem Steg (6) derart fixiert ist, dass sich die Schlauchschelle (2) beim Anziehen aus der Fixierung löst, wobei das Fixierteil (1) nach dem Anziehen der Schlauchschelle (2) funktionslos am Schlauchende (24) verbleibt, und dass der erste Fixierteil unlösbar mit der Schlauchschelle verbunden ist.

2. System nach Anspruch 1, **dadurch gekennzeichnet, dass** das unlösbar mit dem Ringabschnitt der Schlauchschelle (2) vorzugsweise durch Punktschweißen verbundene Fixierteil (1') derart mit dem Ringabschnitt verbunden ist, dass nach der Montage des Fixierteils (1') am Schlauchende (24) die Schlauchschelle (2) im Bereich dieses Ringabschnitts der Schlauchoberfläche aufliegt.

3. System nach Anspruch 2, **dadurch gekennzeichnet, dass** das unlösbar mit dem Ringabschnitt der Schlauchschelle (2) verbundene Fixierteil (1') ein U-förmiges Element aufweist, das am Schlauchende (24) befestigt mit seiner offenen Seite zur Schlauchoberfläche weist, wobei der die beiden U-Schenkel (4') verbindende Steg (6') axial und parallel zur Schlauchoberfläche verläuft und wobei der dem Schlauchende (24) am nächsten liegende U-Schenkel (4') ein Verbindungselement (7') aufweist, mit dem das U-förmige Element an der Stirnseite des Schlauchendes (24) befestigt ist.

4. System nach einem der Ansprüche 1 bis 3, **dadurch gekennzeichnet, dass** die Fixierteile (1, 1', 1") und Schlauchschelle (2) vor der Montage auf dem Schlauchende (24) zu einer Einheit verbindbar sind.

5. System nach einem der Ansprüche 1 bis 4, **dadurch gekennzeichnet, dass** die U-Schenkel (4, 5) zur lösbaren Fixierung des Ringabschnitts auf ihrer Innenseite jeweils einen oder mehrere Haken, Noppen, Wülste oder andere Vorsprünge aufweisen, die zum Steg (6) hin Hinterschnitte bilden, in welche die Seitenkanten des Ringabschnitts lösbar einrastbar sind.

6. System nach Anspruch 5, **dadurch gekennzeichnet, dass** die U-Schenkel (4, 5) auf ihrer Außenseite eine parallel zu Schlauchoberfläche verlaufende Sicke (9) aufweisen, derart, dass auf ihrer Innenseite jeweils ein entsprechender Vorsprung (10) zur Bildung eines Hinterschnittes entsteht, in den die Seitenkanten des Ringabschnitts lösbar einrastbar sind.

7. System nach Anspruch 5, **dadurch gekennzeichnet, dass** die U-Schenkel (4, 5) auf ihrer Außenseite wenigstens einen Körnerschlag (11) aufweisen, derart, dass auf ihrer Innenseite jeweils ein entsprechender Vorsprung (12) zur Bildung eines Hinterschnittes entsteht, in welchen die Seitenkanten des Ringabschnitts lösbar einrastbar sind.

8. System nach Anspruch 5, **dadurch gekennzeichnet, dass** die U-Schenkel (4, 5) zur lösbaren Fixierung des Ringabschnitts auf ihrer Innenseite jeweils einen oder mehrere Hinterschnitte, insbesondere in Form von Nuten, Einkerbungen (13) oder anderen Vertiefungen, aufweisen, in welche die Seitenkanten des Ringabschnitts lösbar einrastbar sind.

9. System nach einem der Ansprüche 1 bis 4, **dadurch gekennzeichnet, dass** der Steg ein U-förmiges Kunststoffteil ist, das mit seiner offenen Seite (14) zur Schlauchoberfläche weist, wobei der die beiden U-Schenkel verbindende Steg (15) des Kunststoffteils axial und parallel zur Schlauchoberfläche verläuft, wobei dessen U-Schenkel (16, 17) an ihren Enden jeweils einen nach innen weisenden Vorsprung (18) aufweisen, die zum Steg (15) des Kunststoffteils hin Hinterschnitte bilden, in welche die Seitenkanten des Ringabschnitts lösbar einrastbar sind.

10. System nach einem der Ansprüche 1 bis 4, **dadurch gekennzeichnet, dass** Teile des U-förmigen Elements oder des Ringabschnitts zur lösbaren Fixierung der Schlauchschelle (2) plastisch verformbar sind.

11. System nach Anspruch 10, **dadurch gekennzeichnet, dass** zur lösbaren Fixierung der Schlauchschelle (2) die U-Schenkel (4, 5) jeweils eine Lasche (19) aufweisen, die der anderen gegenüberliegt und mit ihrem freien Ende aus der Schenkelwand in den Zwischenraum (8) gedrückt und zur Schlauchoberfläche ausgerichtet ist, derart, dass der Ringabschnitt zwischen Steg (6) und Lasche (19) angeordnet ist, wobei die Laschen (19) beim Anziehen der Schlauchschelle (2) in die Schenkelwand zurückgedrückt werden.

12. System nach einem der Ansprüche 1 bis 4, **dadurch gekennzeichnet, dass** sowohl der Steg (6) des U-förmigen Elements als auch der Ringabschnitt der Schlauchschelle(2) eine Durchbohrung aufweisen und mittels einer Kunststoffniet (20) miteinander verbindbar sind, derart, dass die Kunststoffniet (20) beim Anziehen der Schlauchschelle (2) aus der Durchbohrung gezogen wird, wobei sich die Schlauchschelle (2)löst.

13. System nach einem der Ansprüche 1 bis 4, **dadurch gekennzeichnet, dass** der Steg (6) des U-förmigen Elements eine Durchbohrung und der Ringabschnitt der Schlauchschelle eine Ausstülpung (21) aufweisen, wobei die Ausstülpung (21) durch die Durchbohrung geführt und zur lösbaren Fixierung der Schlauchschelle (2) an dem U-förmigen Element nach außen gebogen ist.

14. System nach einem der Ansprüche 1 bis 4, **dadurch gekennzeichnet, dass** der Ringabschnitt kraftschlüssig zwischen den U-Schenkeln (4, 5) lösbar einklemm- oder einkeilbar ist, wobei die U-Schenkel (4, 5) auf ihrer Innenseite keilförmig zum Steg (6) hin zusammenlaufen.

15. System nach einem der Ansprüche 1 bis 14, **dadurch gekennzeichnet, dass** das Verbindungselement (7) mit dem Schlauchende (24) verpresst ist.

16. System nach einem der Ansprüche 1 bis 15, **dadurch gekennzeichnet, dass** das Verbindungselement (7) in das Schlauchende (24) eingestochen ist.

17. System nach einem der Ansprüche 1 bis 16, **dadurch gekennzeichnet, dass** das Verbindungselement (7) ein U-förmiges Teil ist, dessen offene Seite (22) zur Stirnseite des Schlauchendes (24) weist, wobei ein U-Schenkel (23) des Verbindungselement (7) mit dem U-Schenkel (4) des U-förmigen Elements vorzugsweise stoffschlüssig verbunden ist.

18. System nach einem der Ansprüche 1 bis 17, **dadurch gekennzeichnet, dass** das Fixierteil (1, 1', 1") aus Metall und/oder aus Kunststoffbesteht.

## Claims

1. System for pre-positioning a hose clip (2) on a hose end (24), comprising
a) a first fixing part (1') which is connected to an annular section of the hose clip (2) and is fastened to the hose end (24), and
b) one or more, preferably two, further fixing parts (1, 1") which each have a U-shaped element which, fastened to the hose end (24), points with its open side (3) to the hose surface, wherein the web (6) which connects the two U limbs (4, 5) runs axially and parallel to the hose surface, and wherein the U limb (4) closest to the hose end (24) has a connecting element (7) with which the U-shaped element is fastened to the end side of the hose end (24), wherein the U-shaped element is designed in such a manner that the hose clip (2) which is pulled onto the hose end (24) is fixed in the intermediate space (8) of the U-shaped element by means of an annular section, **characterized in that** the hose clip is fixed by means of a releasable snap-in or latching connection between the annular section and the U limbs (4, 5) or the web (6) in such a manner that the hose clip (2) is released from the fixing during tightening, with the fixing part (1) remaining without function on the hose end (24) after the hose clip (2) has been tightened, and **in that** the first fixing part is connected non-releasably to the hose clip.

2. System according to Claim 1, **characterized in that** the fixing part (1') which is connected non-releasably to the annular section of the hose clip (2) preferably by means of spot welding is connected to the annular section in such a manner that, after the fixing part (1') has been installed on the hose end (24), the hose clip (2) rests in the region of said annular section of the hose surface.

3. System according to Claim 2, **characterized in that** the fixing part (1') which is connected non-releasably to the annular section of the hose clip (2) has a U-shaped element which, fastened to the hose end (24), points with its open side to the hose surface, with the web (6') which connects the two U limbs (4') running axially and parallel to the hose surface, and with the U limb (4') closest to the hose end (24) having a connecting element (7') with which the U-shaped element is fastened to the end side of the hose end (24).

4. System according to one of Claims 1 to 3, **characterized in that** the fixing parts (1, 1' , 1") and the hose clip (2) can be connected to form a unit before being installed on the hose end (24).

5. System according to one of Claims 1 to 4, **characterized in that** the insides of the U limbs (4, 5) each have, for the releasable fixing of the annular section, one or more hooks, studs, bulges or other projections which, toward the web (6), form undercuts into which the side edges of the annular section can be releasably latched.

6. System according to Claim 5, **characterized in that** the outsides of the U limbs (4, 5) have a bead (9) running parallel to the hose surface such that a corresponding projection (10) is produced in each case on the insides of said U limbs in order to form an undercut into which the side edges of the annular section can be releasably latched.

7. System according to Claim 5, **characterized in that** the outsides of the U limbs (4, 5) have at least one center-punch mark (11) such that a corresponding projection (12) is produced in each case on the insides of said U limbs in order to form an undercut into which the side edges of the annular section can be releasably latched.

8. System according to Claim 5, **characterized in that** the insides of the U limbs (4, 5) each have, for the releasable fixing of the annular section, one or more undercuts, in particular in the form of grooves, notches (13) or other depressions into which the side edges of the annular section can be releasably latched.

9. System according to one of Claims 1 to 4, **characterized in that** the web is a U-shaped plastic part which points with its open side (14) to the hose surface, with the web (15) of the plastic part, which web connects the two U limbs, running axially and parallel to the hose surface, and with the ends of the U limbs (16, 17) of said web each having an inwardly pointing projection (18), said projections, toward the web (15) of the plastic part, forming undercuts into which the side edges of the annular section can be releasably latched.

10. System according to one of Claims 1 to 4, **characterized in that** parts of the U-shaped element or of the annular section are plastically deformable for the releasable fixing of the hose clip (2).

11. System according to Claim 10, **characterized in that**, for the releasable fixing of the hose clip (2), the U limbs (4, 5) each have a tab (19), one tab lying opposite the other tab and being pressed at its free end out of the limb wall into the intermediate space (8) and being aligned with the hose surface in such a manner that the annular section is arranged between the web (6) and tab (19), with the tabs (19) being pressed back into the limb wall during tightening of the hose clip (2).

12. System according to one of Claims 1 to 4, **characterized in that** both the web (6) of the U-shaped element and the annular section of the hose clip (2) have a through hole and can be connected to each other by means of a plastic rivet (20) in such a manner that the plastic rivet (20) is pulled out of the through hole during tightening of the hose clip (2), with the hose clip (2) being released.

13. System according to one of Claims 1 to 4, **characterized in that** the web (6) of the U-shaped element has a through hole, and the annular section of the hose clip has a protuberance (21), with the protuberance (21) being guided through the through hole and being bent outward in order to releasably fix the hose clip (2) to the U-shaped element.

14. System according to one of Claims 1 to 4, **characterized in that** the annular section can be clamped or wedged releasably between the U limbs (4, 5) in a frictional manner, with the insides of the U limbs (4, 5) converging in a wedge-shaped manner toward the web (6).

15. System according to one of Claims 1 to 14, **characterized in that** the connecting element (7) is pressed onto the hose end (24).

16. System according to one of Claims 1 to 15, **characterized in that** the connecting element (7) is inserted into the hose end (24).

17. System according to one of Claims 1 to 16, **characterized in that** the connecting element (7) is a U-shaped part, the open side (22) of which points to the end side of the hose end (24), with a U limb (23) of the connecting element (7) being connected to the U limb (4) of the U-shaped element, preferably with a cohesive material joint.

18. System according to one of Claims 1 to 17, **characterized in that** the fixing part (1, 1', 1") is composed of metal and/or of plastic.

## Revendications

1. Système de positionnement préalable d'un collier de serrage (2) à une extrémité d'un flexible (24), constitué :
a) d'une première partie de fixation (1') fixée à l'extrémité du flexible (24) et connectée à une portion annulaire du collier de serrage (2), et
b) d'une ou de plusieurs, de préférence de deux parties de fixation supplémentaires (1, 1"), qui présentent chacune un élément en forme de U, qui est fixé à l'extrémité du flexible (24) et est tourné avec son côté ouvert (3) vers la surface du flexible, l'âme (6) reliant les deux branches du U (4, 5) s'étendant axialement et parallèlement à la surface du flexible et la branche du U (4) se trouvant le plus près de l'extrémité du flexible (24) présentant un élément de connexion (7), avec lequel l'élément en forme de U est fixé au côté frontal de l'extrémité du flexible (24), l'élément en forme de U étant réalisé de telle sorte que le collier de serrage (2) tiré sur l'extrémité du flexible (24) soit fixé avec une portion annulaire dans l'espace intermédiaire (8) de l'élément en forme de U, **caractérisé en ce que** le collier de serrage est fixé par une connexion détachable par encliquetage ou enclenchement entre la portion annulaire et les branches du U (4, 5) ou l'âme (6), de telle sorte que le collier de serrage (2) se détache de la fixation lors du vissage, la partie de fixation (1) restant sans fonction sur l'extrémité du flexible (24) après le vissage du collier de serrage (2), et **en ce que** la première partie de fixation est connectée de manière imperdable au collier de serrage.

2. Système selon la revendication 1, **caractérisé en ce que** la partie de fixation (1') connectée de préférence par soudage par points de manière imperdable à la portion annulaire du collier de serrage (2) est connectée à la portion annulaire de telle sorte qu'après le montage de la partie de fixation (1') sur l'extrémité du flexible (24), le collier de serrage (2) s'applique dans la région de cette portion annulaire de la surface du flexible.

3. Système selon la revendication 2, **caractérisé en ce que** la partie de fixation (1') connectée de manière imperdable à la portion annulaire du collier de serrage (2) présente un élément en forme de U, qui est fixé à l'extrémité du flexible (24) et est tourné avec son côté ouvert vers la surface du flexible, l'âme (6') reliant les deux branches du U (4') s'étendant axialement et parallèlement à la surface du flexible et la branche du U (4') située le plus près de l'extrémité du flexible (24) présentant un élément de connexion (7') avec lequel l'élément en forme de U est fixé au côté frontal de l'extérieur du flexible (24).

4. Système selon l'une quelconque des revendications 1 à 3, **caractérisé en ce que** les parties de fixation (1, 1', 1") et le collier de serrage (2) peuvent être connectés avant le montage sur l'extrémité du flexible (24) pour former une unité.

5. Système selon l'une quelconque des revendications 1 à 4, **caractérisé en ce que** les branches du U (4, 5) présentent, pour la fixation détachable de la portion annulaire sur son côté intérieur, à chaque fois un ou plusieurs crochets, boutons, bourrelets ou d'autres saillies, qui forment des contre-dépouilles en direction de l'âme (6), dans lesquelles les arêtes latérales de la portion annulaire peuvent s'encliqueter de manière amovible.

6. Système selon la revendication 5, **caractérisé en ce que** les branches du U (4, 5) présentent, sur leur côté extérieur, une moulure (9) s'étendant parallèlement à la surface du flexible, de telle sorte que sur leur côté intérieur, à chaque fois une saillie correspondante (10) soit réalisée pour former une contre-dépouille, dans laquelle les arêtes latérales de la portion annulaire peuvent être encliquetées de manière amovible.

7. Système selon la revendication 5, **caractérisé en ce que** les branches du U (4, 5) présentent sur leur côté extérieur au moins un coup de pointeau (11) de telle sorte que sur leur côté intérieur, à chaque fois une saillie correspondante (12) soit réalisée pour former une contre-dépouille, dans laquelle les arêtes latérales de la portion annulaire peuvent être encliquetées de manière amovible.

8. Système selon la revendication 5, **caractérisé en ce que** les branches du U (4, 5), pour la fixation amovible de la portion annulaire sur leur côté intérieur présentent à chaque fois une ou plusieurs contre-dépouilles, notamment sous forme de rainures, d'encoches (13), ou d'autres renfoncements, dans lesquelles les arêtes latérales de la portion annulaire peuvent être encliquetées de manière amovible.

9. Système selon l'une quelconque des revendications 1 à 4, **caractérisé en ce que** l'âme est une pièce en plastique en forme de U, qui est tournée avec son côté ouvert (14) vers la surface du flexible, l'âme (15) de la pièce en plastique reliant les deux branches du U s'étendant axialement et parallèlement à la surface du flexible, ses branches de U (16, 17) présentant à leurs extrémités à chaque fois une saillie (18) tournée vers l'intérieur, lesquelles saillies forment des contre-dépouilles vers l'âme (15) de la pièce en plastique, dans lesquelles les arêtes latérales de la portion annulaire peuvent être encliquetées de manière amovible.

10. Système selon l'une quelconque des revendications 1 à 4, **caractérisé en ce que** des parties de l'élément en forme de U ou de la portion annulaire peuvent être déformées plastiquement pour la fixation amovible du collier de serrage (2).

11. Système selon la revendication 10, **caractérisé en ce que** pour la fixation amovible du collier de serrage (2), les branches du U (4, 5) présentent à chaque fois une patte (19), qui est opposée à l'autre, et qui est pressée avec son extrémité libre hors de la paroi de la branche dans l'espace intermédiaire (8) et qui est orientée vers la surface du flexible, de telle sorte que la portion annulaire soit disposée entre l'âme (6) et la patte (19), les pattes (19) étant repoussées dans la paroi de la branche lors du vissage du collier de serrage (2).

12. Système selon l'une quelconque des revendications 1 à 4, **caractérisé en ce que** l'âme (6) de l'élément en forme de U ainsi que la portion annulaire du collier de serrage (2) présentent un alésage traversant et peuvent être connectées l'une à l'autre au moyen d'un rivet en plastique (20), de telle sorte que le rivet en plastique (20), lors du vissage du collier de serrage (2), soit tiré hors de l'alésage traversant, le collier de serrage (2) étant ainsi libéré.

13. Système selon l'une quelconque des revendications 1 à 4, **caractérisé en ce que** l'âme (6) de l'élément en forme de U présente un alésage traversant et la portion annulaire du collier de serrage présente une protubérance (21), la protubérance (21) étant guidée à travers l'alésage traversant et étant cintrée vers l'extérieur pour la fixation amovible du collier de serrage (2) sur l'élément en forme de U.

14. Système selon l'une quelconque des revendications 1 à 4, **caractérisé en ce que** la portion annulaire peut être serrée ou clavetée de manière amovible par engagement par force entre les branches du U (4, 5), les branches du U (4, 5) convergeant vers l'âme (6) sur le côté intérieur en forme de clavette.

15. Système selon l'une quelconque des revendications 1 à 14, **caractérisé en ce que** l'élément de connexion (7) est pressé avec l'extrémité du flexible (24).

16. Système selon l'une quelconque des revendications 1 à 15, **caractérisé en ce que** l'élément de connexion (7) est enfoncé dans l'extrémité du flexible (24).

17. Système selon l'une quelconque des revendications 1 à 16, **caractérisé en ce que** l'élément de connexion (7) est une pièce en forme de U, dont le côté ouvert (22) est tourné vers le côté frontal de l'extrémité du flexible (24), une branche du U (23) de l'élément de connexion (7) étant connectée de préférence par liaison de matière avec la branche du U (4) de l'élément en forme de U.

18. Système selon l'une quelconque des revendications 1 à 17, **caractérisé en ce que** la partie de fixation (1, 1', 1") se compose de métal et/ou de plastique.
